# EUROPÄISCHE PATENTANMELDUNG

(11) **EP 1 340 666 A2**
(43) Veröffentlichungstag der Anmeldung: **03.09.2003**
(21) Anmeldenummer: 03004190.9
(22) Anmeldetag: 27.02.2003
(51) Int. Cl.: B62B 1/12

(54) **Hubroller**

(30) Priorität: 01.03.2002 DE 10208813
(71) Anmelder: R-R-R Transportgeräte-Fabrik GmbH, 42897 Remscheid (DE)
(72) Erfinder: Rötzel, Dieter, 42897 Remscheid (DE)
(74) Vertreter: Füssel, Michael, Dipl.-Ing.

(57) **Zusammenfassung**

Hubroller (1) zum vertikalen Anheben und anschließendem horizontalen Verbringen schwerer Lasten mit einem vertikalen Fahrgestellrahmen (2) vorgegebener Breite an dessen unterer Querseite zwei Lenkrollen (3) angebracht sind und der im Bereich des oberen Endes über zumindest eine Griffvorrichtung (4) zum Rangieren verfügt, wobei an dem Fahrgestellrahmen (2) der feststehende Bestandteil (6) einer Hubvorrichtung (5) abgestützt ist, die mit ihrem hubbeweglichen Bestandteil (7) ein Hubgestell (8a) mit von den beiden Lenkrollen (3) wegweisender Schaufel (8b) beaufschlagt, und wobei das Hubgestell (8a) parallel zur Hubrichtung an dem Fahrgestellrahmen vertikal geführt ist.

## Beschreibung

Die Erfindung betrifft einen Hubroller nach Oberbegriff des Hauptanspruchs.

Derartige Hubroller sind bekannt, zum Beispiel aus RRR Transportgeräte, leichtes Spiel mit schweren Lasten.

Derartige Hubroller dienen zum vertikalen Anheben und anschließendem horizontalen Verbringen schwerer Lasten.

Zu diesem Zweck ist ein vertikaler Fahrgestellrahmen vorgegebener Breite vorgesehen, an dessen unterer Querseite zwei Lenkrollen angebracht sind.

Im oberen Bereich des Fahrgestellrahmens ist eine Griffvorrichtung vorgesehen, mit deren Hilfe der Hubroller rangierbar ist.

Ferner stützt sich an dem Fahrgestellrahmen eine Hubvorrichtung ab, so daß der feststehende Bestandteil der Hubvorrichtung dem Fahrgestellrahmen zugehörig ist.

Der hubbewegliche Bestandteil der Hubvorrichtung beaufschlagt ein Hubgestell, welches mit einer Schaufel unter die anzuhebende Last eingefahren wird und anschließend mit der Hubvorrichtung so weit anhebbar ist, daß die Last oberhalb des Erdbodens schwebt.

Die Schaufel weist zu diesem Zweck von den Lenkrollen weg. Das Hubgestell wird am Fahrgestellrahmen parallel zur Hubrichtung vertikal geführt.

Zweckmäßigerweise werden schwere Lasten von zwei derartigen Hubrollern bewegt, indem an zwei sich gegenüberliegenden Seiten der Last jeweils ein derartiger Hubroller mit seiner Schaufel unter die Last gefahren, das Hubgestell mitsamt der Last anschließend angehoben und die Last dann mittels der beiden sich gegenüberliegenden Hubroller auf dem Erdboden verfahren werden kann.

Derartige Hubroller haben sich in der Praxis hervorragend bewährt, zum Beispiel beim Transportieren von Aktenschränken, Tresoren, Stahlschränken oder dergleichen.

Die heutigen Konstruktionen derartiger Hubroller weisen im wesentlichen rechteckförmige Fahrgestellrahmen auf, die mit quer verlaufenden Verbindungsstreben ausgestattet sind.

Diese Konstruktion hat sich in der Praxis zwar durchaus bewährt, ist jedoch recht fertigungsintensiv und aufgrund moderner Fertigungsverfahren nicht mehr besonders praxisgerecht.

Es ist daher Aufgabe der Erfindung den bekannten Hubroller so zu verbessern, daß er unter Einsatz von weniger Material eine den heutigen Konstruktionen zumindest vergleichbare Festigkeit bietet.

Diese Aufgabe löst die Erfindung mit den Merkmalen des Hauptanspruchs.

Wesentlich an der Erfindung ist die X-förmige Gestaltung des vertikalen Fahrgestells. Dabei ist der feststehende Bestandteil der Hubvorrichtung am Kreuzungspunkt der beiden sich kreuzenden Schenkel des X starr angebracht und für die notwendige Stabilität in der vertikal liegenden Hauptbelastungsrichtung sorgt eine querlaufende Verbindungsstrebe im unteren Bereich des X, die sowohl mit den unteren Endbereichen des X als auch mit den feststehenden Bestandteilen der Hubvorrichtung starr verbunden ist.

Es entsteht auf diese Weise durch lediglich vier unterschiedliche Bauteile ein starres Fachwerkgebilde, welches ohne weiteres Lasten bis zu 2000 Kilogramm tragen kann.

Hierzu sind lediglich vier Verbindungsstellen notwendig, um die zweckmäßigerweise aus vier einzelnen Bestandteilen bestehende Konstruktion starr miteinander zu verbinden.

Bekannterweise bestehen derartige Fahrgestellrahmen aus metallischem Werkstoff, der sich an den gemeinsamen Verbindungsstellen auf einfache Weise miteinander verschweißen läßt.

Wird darüber hinaus die quer verlaufende Verbindungsstrebe am unteren Ende durch eine nach unten oder oben gekrümmte Verbindungsstange gebildet, ergeben sich zusätzliche Stabilitätsverbesserungen, da die Krümmung der Verbindungsstrebe in Folge ihrer beidseitig in den Endbereichen und mittigen starren Verbindung am feststehenden Bestandteil der Hubvorrichtung selber praktisch keinen Durchbiegungen mehr unterliegt und auf diese Weise die Stabilität des X-förmigen Fahrgestellrahmens exponentiell verstärkt.

Obwohl es durchaus genügt, die vertikalen Linearführungen für das Hubgestell an der Hubvorrichtung vorzusehen, empfiehlt es sich für größere Lasten, zusätzliche vertikale Linearführungen für das Hubgestell an dem Fahrgestellrahmen vorzusehen.

Auch hierfür bietet sich die querlaufende Verbindungsstrebe an, da sie zwei hinreichend weit voneinander beabstandete Befestigungsstellen für die Linearführung bietet.

Zusätzliche Linearführungen können an den beiden oberen Halbschenkeln des X vorgesehen sein.

Um die Reibungsverluste in den Linearführungen zu minimieren wird vorgeschlagen, daß die Gleitlagerstellen der Linearführungen aus Kunststoff, zum Beispiel Polytetrafluoräthylen sind.

Zweckmäßigerweise sind die Lenkrollen zwangsgelenkt.

Für diesen Fall bietet es sich an, an jeweils vertikal übereinander angeordneten Endspitzen des X paarweise zueinander fluchtende Muffen starr anzubringen, die mit jeweils einer vertikalen Lenkstange durchsetzt werden. Die vertikale Lenkstange soll an ihrem unteren Ende drehfest mit ihrer jeweiligen Lenkrolle verbunden sein und an ihrem oberen Ende Bestandteil einer parallelogrammgeführten Lenkvorrichtung sein.

Hierzu werden Ausführungsbeispiele angegeben.

Zweckmäßigerweise haben für diesen Fall die Lenkrollen einen Nachlauf von NULL und werden allein über die Lenkstangen zwangsgelenkt, die ihrerseits von der parallelogrammgeführten Lenkvorrichtung beaufschlagt werden.

Lenkrollen, die in der Stellung 0° und ±90° arretierbar sind erhöhen den Bedienungskomfort.

Unter der Stellung 0° ist diejenige Stellung zu verstehen, die die Lenkrollen einnehmen, wenn der Hubroller in Richtung der Schaufel nach Art einer Sackkarre verfahren wird. Von dieser 0°-Stellung aus gesehen, sollen die Lenkrollen zu jeder Richtung um 90° verdrehbar sein.

Darüber hinaus ist es zweckmäßig, an dem Hubgestell Gurtschlaufen für einen Spanngurt anzubringen. Diese Maßnahme dient insbesondere der dauernden Fixierung des Spanngurts, so daß dieser nicht verloren gehen kann.

Zweckmäßige Ausführungsformen ergeben sich aus den Unteransprüchen.

Vorzugsweise handelt es sich bei der Hubvorrichtung um eine vertikale Gewindespindel, die in einem Spindelgehäuse sitzt, welches auf ihrer der Schaufel zugewandten Seite einen Längsschlitz zur Führung des Hubgestells aufweist. Am obersten Ende des Spindelgehäuses kann ein Umlenkgetriebe mit Kurbel sitzen, um die Gewindespindel in Drehung zu versetzen.

Damit die Kurbel, insbesondere bei der Stellung der Lenkrollen in ±90°, nicht im Weg ist, empfiehlt sich eine Kurbel mit Klappgriff.

Im folgenden wird die Erfindung anhand von Ausführungsbeispielen näher erläutert. Es zeigen:
- Fig. 1: ein erstes Ausführungsbeispiel für den Fahrgestellrahmen in breiter Aufsicht,
- Fig.2: das Ausführungsbeispiel gemäß Fig. 1 in seitlicher Ansicht,
- Fig.3: das Ausführungsbeispiel gemäß Fig. 1 in Ansicht von oben,
- Fig.4: ein Ausführungsbeispiel für einen Hubroller in vollständiger Ansicht von hinten,
- Fig. 5: das Ausführungsbeispiel gemäß Fig.4 in seitlicher Ansicht,
- Fig.6: das Ausführungsbeispiel gemäß Fig.4 in Ansicht von oben,
- Fig.7: ein Ausführungsbeispiel für einen Hubroller für leichte Lasten in Ansicht von hinten,
- Fig.8: das Ausführungsbeispiel gemäß Fig.7 in seitlicher Ansicht,
- Fig. 9: das Ausführungsbeispiel gemäß Fig.7 in Ansicht von oben.

Sofern im folgenden nichts weiter gesagt ist, gilt die folgende Beschreibung stets für alle Figuren.

Die vorliegenden Figuren zeigen einen Hubroller 1 zum vertikalen Anheben und anschließendem horizontalen Verbringen schwerer Lasten.

Zu diesem Zweck ist ein vertikaler Fahrgestellrahmen 2 vorgegeben, der eine vorbestimmte Breite aufweist und an dessen unterer Querseite zwei Lenkrollen 3 angebracht sind und der im Bereich seines oberen Endes über zumindest eine Griffvorrichtung 4 zum Rangieren verfügt.

Zum Anheben der Last ist an dem Fahrgestellrahmen 2 eine Hubvorrichtung 5 mit ihrem feststehenden Bestandteil 6 abgestützt. Der hubbewegliche Bestandteil 7 der Hubvorrichtung 5 beaufschlagt ein Hubgestell 8a, welches eine von den Rollen wegweisende Schaufel 8b besitzt.

Die Schaufel wird unter die anzuhebende Last gesteckt und anschließend mit Hilfe der Hubvorrichtung 5 so weit angehoben, daß sie zusammen mit dem Hubroller 1 verfahrbar ist.

Zu diesem Zweck ist das Hubgestell 8a parallel zur Hubrichtung an dem Fahrgestellrahmen 2 vertikal geführt.

Hierzu dient die vertikale Linearführung 9.

Wesentlich ist, daß der Fahrgestellrahmen 2 zwischen dem oberen und dem unteren Ende X-förmig verläuft und an dem Kreuzungspunkt seiner Schenkel starr mit dem feststehenden Bestandteil 6 der Hubvorrichtung 5 verbunden ist. Der Kreuzungspunkt der beiden Schenkel des X weist daher einen starren Verbindungspunkt 10 zum feststehenden Bestandteil 6 der Hubvorrichtung 5 auf.

Die Bestandteile des Hubrollers sind üblicherweise aus Metall gefertigt.

Der starre Verbindungspunkt kann daher durch eine Schweißverbindung realisiert sein.

Ferner ist wesentlich, daß an dem unteren Ende des X-förmigen Fahrgestellrahmens 2 die Lenkrollen und an dem oberen Ende die Griffvorrichtung 4 befestigt sind.

Ferner sind die beiden auseinander strebenden unteren Schenkel des X durch eine querlaufende Verbindungsstrebe 11 miteinander starr verbunden, die ebenfalls am Befestigungspunkt 12 starr an dem feststehenden Bestandteil 6 der Hubvorrichtung 5 befestigt ist.

Darüber hinaus ist lediglich eine einzige Hubvorrichtung 5 mittig zwischen den Lenkrollen 3 sitzend vorgesehen, die zugleich eine vertikale Linearführung 9 für das Hubgestell 8a bildet.

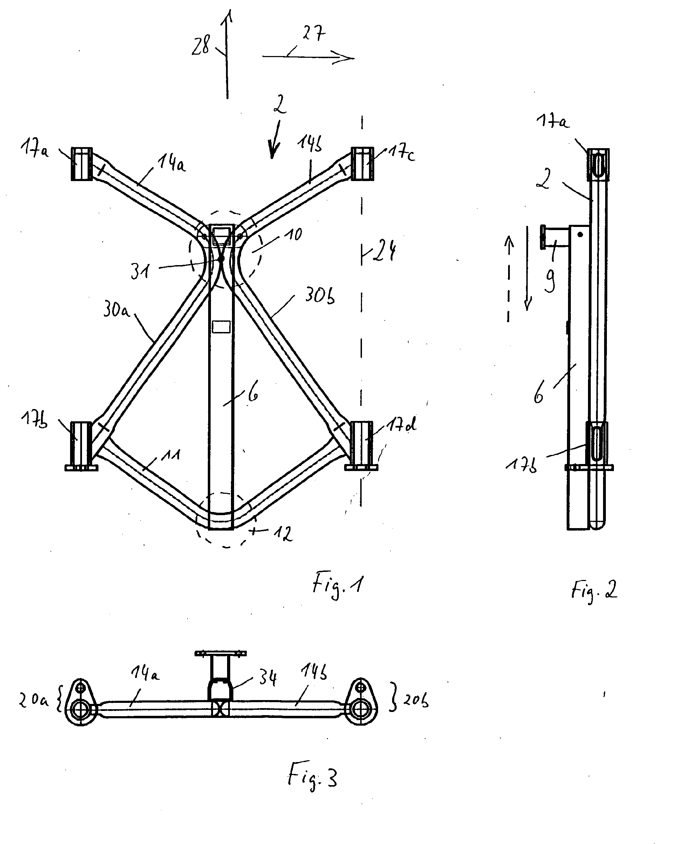

Darüber hinaus zeigen die Fig. 1,4 und 7 eine Weiterbildung, bei welcher die querlaufende Verbindungsstrebe 11 eine - hier - nach unten gekrümmte Verbindungsstange ist, an welcher ebenfalls die feststehenden Bestandteile 6 der Hubvorrichtung am Befestigungspunkt 12 starr befestigt sind.

Alternativ zu der - hier - nach unten gekrümmten Verbindungsstange läßt sich auch eine nach oben gekrümmte Verbindungsstange verwenden, wobei die hier gezeigte Ausführungsform aufgrund der größeren Hebelverhältnisse stabiler sein dürfte.

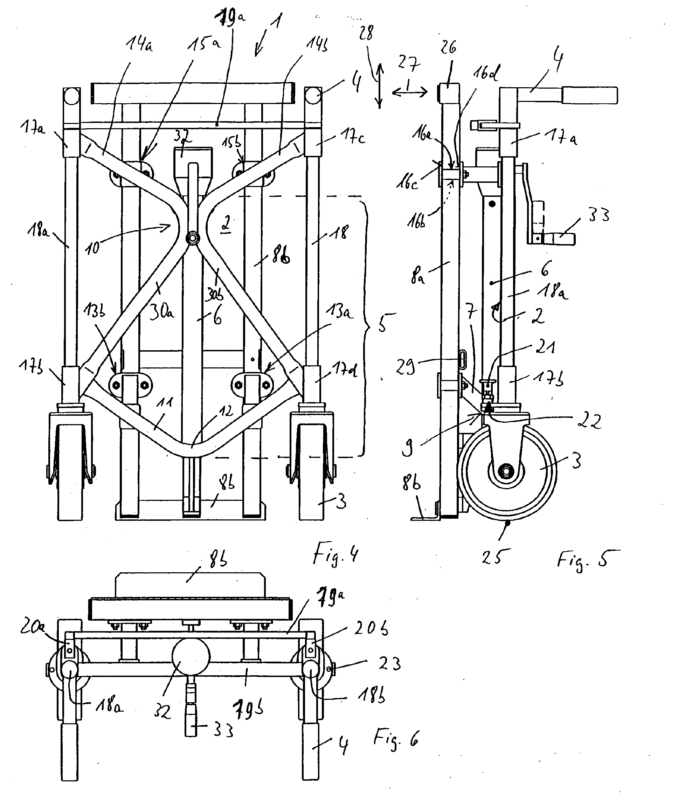

Insbesondere Fig.4 zeigt ein Ausführungsbeispiel der Erfindung, welches zum Rangieren höherer Lasten geeignet ist.

Zu diesem Zweck weist die querlaufende Verbindungsstrebe 11 zwei weitere Linearführungen 13a,13b auf, die symmetrisch zur Hubvorrichtung 5 jedoch mit relativ großem Abstand von dieser angeordnet sind.

Bei dieser Ausführungsform sind aufgrund der großen zu bewältigenden Lasten auch im Bereich der oberen Halbschenkel 14a,14b des X weitere Linearführungen 15a, 15b vorgesehen.

Insgesamt sitzt bei dieser Ausführungsform das Hubgestell 8a an den vier Linearführungen 13a,13b und 15a, 15b sowie an der vertikalen Linearführung 9 durch die Hubvorrichtung 5.

Zweckmäßigerweise sind die jeweiligen Gleitlagerstellen 16a - d der Linearführungen 13a,13b;15a,15b aus Kunststoff.

Zu diesem Zweck wird vorgeschlagen, daß die in Fahrtrichtung gesehen nach rechts und links wirksamen Linearführungen 16a,b aus axial durchbohrten Kunststoffrollen bestehen, die von einer Durchgangsschraube durchsetzt werden und daß die in Fahrtrichtung vor bzw. hinter dem Hubgestell 8a liegenden Gleitlagerstellen 16c,16d einfache Kunststoffplättchen o.ä. zum Beispiel aus Polytetrafluoräthylen oder dgl. verschleißfesten Kunststoffen sind.

Darüber hinaus zeigen die Ausführungsbeispiele eine weitere Besonderheit.

Die jeweils vertikal übereinander angeordneten Endspitzen des X sind mit paarweise zueinander fluchtenden Muffen 17a,17b;17c,17d ausgestattet. Jeweils die einer Seite zugeordneten Paare von Muffen 17a,17b bzw. 17c,17d sind von jeweils einer vertikalen Lenkstange 18a,18b durchsetzt. Jede Lenkstange ist an ihrem unteren Ende drehfest mit der Lenkrolle verbunden. Die oberen Enden der beiden Lenkstangen sind über die jeweils zueinander parallelen Längsschenkel 19a,19b bzw. Querschenkel 20a,20b nach Art eines Parallelogramms geführt.

Die Einleitung der Lenkbewegung erfolgt über die nach hinten wegstehenden Griffvorrichtungen 4 in das Parallelogramm 19a, 19b, 20a, 20b.

Darüber hinaus zeigen die Fig.5 und 8, daß die Lenkrollen 3 einen Nachlauf von NULL haben. Dieser Nachlauf von NULL wird dadurch erreicht, daß die Drehachse 24 der Lenkrolle, die in Längsrichtung der jeweiligen Lenkstange 18a bzw. 18b verläuft, genau durch den Aufstandspunkt 25 des Rades auf dem Erdboden geht.

Es gibt daher für jede der beiden Lenkrollen keine bevorzugte Ausrichtung während des Fahrens sondern die jeweilige Lenkrichtung der Rolle wird allein über die Parallelogrammführung 19a bis 20b vorgegeben.

Zusätzlich ist gezeigt, daß jede Lenkrolle in der Stellung 0° und ±90° durch eine Arretiervorrichtung 21 arretierbar ist.

Hierzu dient ein in Richtung zur Lenkrolle federbelasteter Arretierstift 22, der in eine ihm zugeordnete Arretierbohrung 23 einrastet, wenn die jeweilige Lenkrolle in der Position 0° bzw. ±90° steht.

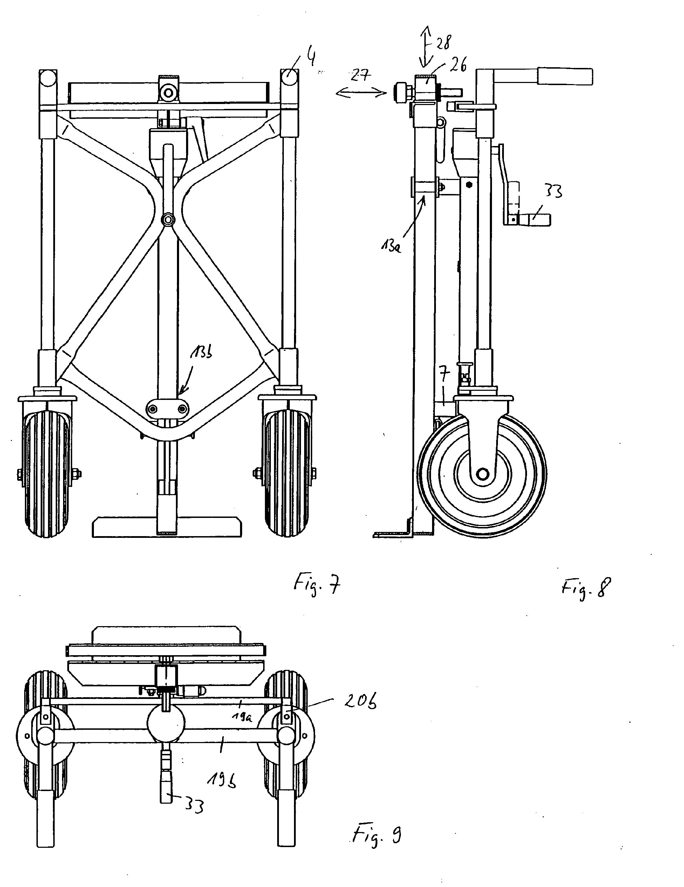

Unter der Position 0° ist diejenige Position zu verstehen, die den Fig.4,6 und 7,9 entspricht, also in Richtung auf die zu befördernde Last zeigt, die auf der Schaufel 8b aufliegen soll.

Aus dieser 0°-Stellung sind die Lenkrollen um jeweils 90° nach rechts bzw. links verschwenkbar und in dieser verschwenkten Stellung arretierbar.

Ergänzend hierzu zeigen die Figuren die Anordnung einer Anlagestütze 26 am oberen Ende des Hubgestells 8a. Diese Anlagestütze dient der Stabilisierung des Hubrollers im Einsatz, wobei die Anlagestütze 26 auf ihrer der zu befördernden Last zugewandten Seite eine gummiweiche/Auflage trägt um Beschädigungen des Transportguts zu vermeiden.

Ergänzend hierzu soll erwähnt sein, daß die Lastauflage der Schaufel 8b ebenfalls mit einer gummiweichen Beschichtung ausgestattet sein kann, um den Reibwert zu erhöhen.

Ferner kann die Anlagestütze 26 sowohl in Horizontalrichtung 27 als auch in Vertikalrichtung 28 verstellbar sein.

Diese Maßnahme dient dem Zweck, die Position der Anlagestütze 26 relativ zur Position der Schaufel 8b auf die jeweils geometrischen Gegebenheiten der zu befördenden Last einzustellen.

Darüber hinaus zeigt insbesondere Fig.5 eine Weiterbildung der Erfindung, bei welcher an dem Hubgestell 8a Gurtschlaufen 29 vorgesehen sind. Diese Gurtschlaufen 29 werden von einem Spanngurt durchzogen, der um die zu befördernde Last herumgelegt und dann gespannt wird.

Damit kann die zu befördernde Last auch bei kurzer Schaufel 8b sicher befördert werden.

Der Vorteil dieser Gurtschlaufen besteht in einer Fixierung des Spanngurtes, der aus diesem Grunde weder verlegt noch verloren werden kann.

Darüber hinaus zeigen die Fig. 1,4 und 7, daß der X-förmige Bestandteil des Fahrgestellrahmens 2 aus zwei Rohrstücken 30a,30b besteht, die >- und <-förmig gebogen und an dem gemeinsamen Berührpunkt 31 starr miteinander verschweißt sind.

Im Bereich des gemeinsamen Berührpunkts 31 erfolgt auch die starre Anbindung des X-förmigen Fahrgestellrahmens 2 an den feststehenden Bestandteil 6 der Hubvorrichtung.

Als Hubvorrichtung kommen hydraulische Hubvorrichtungen oder Spindelhubvorrichtungen in Betracht.

Hierzu zeigen insbesondere die Fig.2 und 3 Spindelhubvorrichtungen, bei denen eine vertikale Gewindespindel in einem Spindelgehäuse 34 sitzt, welches auf seiner der Schaufel 8b zugewandten Seite einen Längsschlitz zur Führung des Hubgestells 8a aufweist.

Innerhalb des Spindelgehäuses 34 ist die Gewindespindel an ihrem oberen und unteren Ende drehbar gelagert und wird über geeignete Betätigungsmittel in Drehung versetzt.

Die Gewindespindel durchsetzt ein entsprechendes Gewindegegenstück, welches in Richtung zum Hubgestell 8a auskragt und an welchem das Hubgestell 8a befestigt ist.

Bei Drehung der Gewindespindel wird dann in an sich bekannter Weise das Hubgestell entsprechend auf- oder abbewegt.

Zur Einleitung der Drehbewegung in die Gewindespindel sitzt am obersten Ende des Spindelgehäuses 34 ein Umlenkgetriebe 32 mit Kurbel.

Zweckmäßigerweise weist die Kurbel einen Klappgriff 33 auf, um bei Verwendung des Hubrollers mit um ±90° verdrehten Lenkrollen 3 Verletzungsgefahren auszuschließen und die Rangierbeweglichkeit zu erhöhen.

### Bezugszeichenaufstellung:

- 1: Hubroller
- 2: vertikaler Fahrgestellrahmen
- 3: Lenkrolle
- 4: Griffvorrichtung
- 5: Hubvorrichtung
- 6: feststehender Bestandteil von 5
- 7: hubbeweglicher Bestandteil von 5
- 8a: Hubgestell
- 8b: Schaufel
- 9: vertikale Linearführung
- 10: starrer Verbindungspunkt
- 11: querlaufende Verbindungsstrebe
- 12: Befestigungspunkt von 11 an 6
- 13a: weitere Linearführung
- 13b: weitere Linearführung
- 14a: oberer Halbschenkel, links
- 14b: oberer Halbschenkel, rechts
- 15a: Linearführung an 14a
- 15b: Linearführung an 14b
- 16a-d: Gleitlagerstelle
- 17a-d: Muffe
- 18a: Lenkstange
- 18b: Lenkstange
- 19a, b: Längsschenkel des Parallelogramms
- 20a,b: Querschenkel des Parallelogramms
- 21: Arretiervorrichtung für Lenkrolle
- 22: Arretierstift
- 23: Arretierbohrung
- 24: Drehachse der Lenkrolle
- 25: Aufstandspunkt des Rades
- 26: Anlagestütze
- 27: Horizontalrichtung
- 28: Vertikalrichtung
- 29: Gurtschlaufe
- 30a: erstes Rohrstück
- 30b: zweites Rohrstück
- 31: gemeinsamer Berührpunkt
- 32: Umlenkgetriebe
- 33: Klappgriff
- 34: Spindelgehäuse

## Patentansprüche

1. Hubroller (1) zum vertikalen Anheben und anschließendem horizontalen Verbringen schwerer Lasten mit einem vertikalen Fahrgestellrahmen (2) vorgegebener Breite an dessen unterer Querseite zwei Lenkrollen (3) angebracht sind und der im Bereich des oberen Endes über zumindest eine Griffvorrichtung (4) zum Rangieren verfügt, wobei an dem Fahrgestellrahmen (2) der feststehende Bestandteil (6) einer Hubvorrichtung (5) abgestützt ist, die mit ihrem hubbeweglichen Bestandteil (7) ein Hubgestell (8a) mit von den beiden Lenkrollen (3) wegweisender Schaufel (8b) beaufschlagt, und wobei das Hubgestell (8a) parallel zur Hubrichtung an dem Fahrgestellrahmen vertikal geführt ist, **dadurch gekennzeichnet, daß**
1.0 der Fahrgestellrahmen (2) zwischen dem oberen und dem unteren Ende X-förmig verläuft und an dem Kreuzungspunkt seiner Schenkel starr mit dem feststehenden Bestandteil (6) der Hubvorrichtung (5) verbunden ist, und
1.1 im Bereich des oberen und des unteren Endes im wesentlichen die Breite des mittleren Rollenabstandes aufweist, wobei
1.2 an dem unteren Ende des X die Lenkrollen (3) und am oberen Ende des X die Griffvorrichtung (4) befestigt sind und daß
1.3 die unteren Schenkel des X durch eine querlaufende Verbindungsstrebe (11) starr miteinander verbunden sind, die auch starr am feststehenden Bestandteil (6) der Hubvorrichtung (5) befestigt ist und daß
1.4 lediglich eine einzige Hubvorrichtung (5) mittig zwischen den Lenkrollen (3) sitzend auch eine vertikale Linearführung für das Hubgestell (8a) bildet.

2. Hubroller nach Anspruch 1, **dadurch gekennzeichnet, daß** die querlaufende Verbindungsstrebe (11) eine nach oben oder unten gekrümmte Verbindungsstange ist, an welcher auch der feststehende Bestandteil (6) der Hubvorrichtung (5) starr befestigt ist.

3. Hubroller nach Anspruch 2, **dadurch gekennzeichnet, daß** an der Verbindungsstange zwei weitere Linearführungen (13a,13b) für das Hubgestell (8a) vorgesehen sind.

4. Hubroller nach einem der Ansprüche 1 bis 3, **dadurch gekennzeichnet, daß** an den oberen Halbschenkeln des X jeweils eine weitere Linearführung (13a, 13b) angebracht ist.

5. Hubroller nach einem der Ansprüche 1 bis 4, **dadurch gekennzeichnet, daß** die Gleitlagerstellen (16a bis d) der Linearführungen (13a, 13b, 15a, 15b) aus Kunststoff sind.

6. Hubroller nach einem der Ansprüche 1 bis 5, **dadurch gekennzeichnet, daß** die jeweils vertikal übereinander angeordneten Endspitzen des X mit paarweise übereinander fluchtenden Muffen (17a, 17b; 17c, 17d) ausgestattet sind, die von je einer vertikalen Lenkstange (18a,18b) durchsetzt werden, die an ihrem unteren Ende drehfest mit der Lenkrolle (3) und an ihrem oberen Ende mit einer parallelogrammgeführten (19a, 19b; 20a, 20b) Lenkvorrichtung verbunden ist.

7. Hubroller nach einem der Ansprüche 1 bis 6, **dadurch gekennzeichnet, daß** die Lenkrollen (3) einen Nachlauf von NULL haben und allein über die Lenkstangen (18a,18b) zwangsgelenkt sind.

8. Hubroller nach Anspruch 6 oder 7, **dadurch gekennzeichnet, daß** die Lenkrollen (3) in der Stellung 0° und ±90° arretierbar sind.

9. Hubroller nach einem der Ansprüche 1 bis 8, **dadurch gekennzeichnet, daß** am oberen Ende des Hubgestells (8a) eine Anlagestütze (26) angebracht ist.

10. Hubroller nach Anspruch 9, **dadurch gekennzeichnet, daß** die Anlagestütze (26) horizontal in Richtung auf die Last verstellbar ist.

11. Hubroller nach Anspruch 9 oder 10, **dadurch gekennzeichnet, daß** die Anlagestütze (26) vertikal in der Höhe verstellbar ist.

12. Hubroller nach einem der Ansprüche 1 bis 11, **dadurch gekennzeichnet, daß** an dem Hubgestell (8a) Gurtschlaufen (29) für einen Spanngurt angebracht sind.

13. Hubroller nach einem der Ansprüche 1 bis 12, **dadurch gekennzeichnet, daß** der Fahrgestellrahmen (2) aus gebogenen Rohrstücken aus Rundrohr besteht.

14. Hubroller nach einem der Ansprüche 1 bis 13, **dadurch gekennzeichnet, daß** der X-förmige Bestandteil des Fahrgestellrahmens (2) aus zwei Rohrstücken (30a,30b) besteht, die >- und <-förmig gebogen und an einem gemeinsamen Berührpunkt (31) miteinander starr verbunden sind, vorzugsweise über den feststehenden Bestandteil (6) der Hubvorrichtung (5).

15. Hubroller nach einem der Ansprüche 1 bis 14, **dadurch gekennzeichnet, daß** die Hubvorrichtung (5) eine vertikale Gewindespindel ist, die in einem Spindelgehäuse sitzt, welches auf ihrer der Schaufel (8b) zugewandten Seite einen Längsschlitz zur Führung des Hubgestells (8a) aufweist.

16. Hubroller nach Anspruch 15, **dadurch gekennzeichnet, daß** am obersten Ende des Spindelgehäuses ein Umlenkgetriebe mit Kurbel sitzt.

17. Hubroller nach Anspruch 16, **dadurch gekennzeichnet, daß** die Kurbel einen Klappgriff (33) aufweist.
